# EUROPEAN PATENT SPECIFICATION

(11) **EP 3 493 949 B1**
(45) Date of publication and mention of the grant of the patent: **28.08.2019**
(21) Application number: 17768500.5
(22) Date of filing: 29.08.2017
(51) Int. Cl.: B25B 27/00, B25B 27/22

(54) **CHAIN FITTING DEVICE**
VORRICHTUNG ZUM MONTIEREN EINER KETTE
DISPOSITIF DE MONTAGE D'UNE CHAÎNE

(30) Priority: 28.08.2016 GB 201614606
(43) Date of publication of application: 12.06.2019
(73) Proprietor: Bambusa Ltd, Attleborough, Norfolk NR17 2DD (GB)
(72) Inventor: TAYLOR, Wayne Michael, Attleborough Norfolk NR17 2DD (GB)
(74) Representative: Dallimore, Geoffrey Robert
(86) International application number: PCT/GB2017/000126
(87) International publication number: WO 2018/042145

(56) References cited:
- EP-A1- 1 522 387
- DE-C- 841 702
- DE-U1- 20 314 163
- US-A1- 2002 119 849
- US-A1- 2011 154 957

## Description

### Field of the Invention

This invention relates to a device according to the preamble of claim 1 for fitting a bicycle chain onto the gears of a push-bike.

### Background to the Invention

During any journey on a bicycle, the chain which connects the pedals to the gears, can detach from the teeth of either the chainring or the gear cassette, resulting in a loss of forward propulsion. The traditional solution to this problem, is for the rider to manually manoeuvre the chain back into position using their hands. However, this method has several limitations. Both hands are required in order for the chain to be placed onto the gears and to turn the gears, perhaps by means of pedal rotation. In some cases, the rear wheel of the bicycle also requires lifting off the ground in order for the gears to turn.

This can be difficult as both hands are already in use, and so the bicycle is often turned upside down which can dirty or damage the seat and handlebars. Moreover, it is easy for the user, whilst positioning the chain over the spokes, to catch skin or clothing between the mechanism causing potential injury to person or damage to clothing. At the least, the user of this traditional method will cover their hands with dirt and oil which will stain and ruin anything they touch.

The current invention seeks to address, at least in part, the above limitations providing a means of reattaching a bike chain in a simple, quick and clean way.

DE-C-841,702 describes a device according to the preamble of claim 1 for transferring a motorcycle chain from one sprocket to another, without the hand coming directly into contact with the chain. The tool has a claw at one end, perpendicular to the tool, which engages with a chain link.

EP-A-1,522,387 describes a bicycle repair tool assembly including a chain tool designed to serve as a more convenient way to repair the links of a chain.

### Summary of the Invention

The invention provides a device according to claim 1 for fitting a chain onto the gears of a push-bike, the device comprising: an elongate body having a first and a second end extending along a first axis; and a head spaced from said first end by a neck; wherein said head comprises at least a first prong and a second prong, each prong having a first attachment end and a free end, wherein said prongs are in fixed attachment to said neck by said first attachment end, said free end extending substantially perpendicularly to said first axis; and wherein said head incorporates a cut-out portion directly inferior to said second prong's first attachment end.

This is particularly advantageous as the body allows the user to manoeuvre the head of the device without getting their hands too close to the chain and chainring. The free end of the second prong enters an aperture in the chain which helps to hold it in place whilst the first prong offers greater protection from the chain slipping off the second prong onto the user's hand. The neck attaching the head to the body provides the necessary leverage for the user to easily reapply the chain to the chainring.

The cut-out portion is additionally particularly advantageous because it enables the chainring to rest within the cut-out portion during reattachment, enabling the chain to get into close proximity with the spokes on the chain ring whilst sill enclosed within the head of the device.

Preferably, said first and second prongs are connected in series such that said first prong is in fixed attachment with said neck proximal to said body and said second prong is in fixed attachment with said first prong distal from said body, wherein the space between the free ends of said first prong and said second prong is suitable for the insertion of a chain link of a bicycle chain.

Preferably, said head further comprises a third prong, wherein said third prong has a first attachment end attached to said first attachment end of said second prong and a free end, wherein said third prong is connected in series with said first and second prongs and most distal from said body. This is particularly advantageous because it provides a defined space for the chain to sit, making it easier to insert the second prong into the apertures in the chain. It also reduces the chances of the chain slipping off the second prong as it is moved.

Preferably, said second prong is shorter than said first and third prongs. This is advantageous because it enables the chain to be aligned by the first and third prongs before the second prong enters the apertures within the chain.

Preferably, said first and third prongs extend inwardly towards said second prong at their respective free ends. This is particularly advantageous because it reduces the ability of the chain slipping off the second prong and out of the head of the device.

Preferably, the space between said first and said second prongs and said second and said third prongs is substantially equal. This is particularly advantageous because it helps to correctly align the holes of the chain with the second prong so that the chain can be easily attached to the head of the device and quickly reattached.

### Brief Description of the Figures

The invention will now be described with reference to the accompanying drawings which show by way of example only, embodiments of a device for fitting a chain onto the gears of a push-bike. In the drawings:
Figure 1 is a first embodiment of a device for fitting a chain onto the gears of a push-bike in side view;
Figures 2a and 2b are a side view of a first embodiment of a device with an attachment node and an elastic strap; and
Figure 3 is a top view of a device for fitting a chain onto the gears of a push-bike, in use attached to a bike chain.

### Detailed Description of the Figures

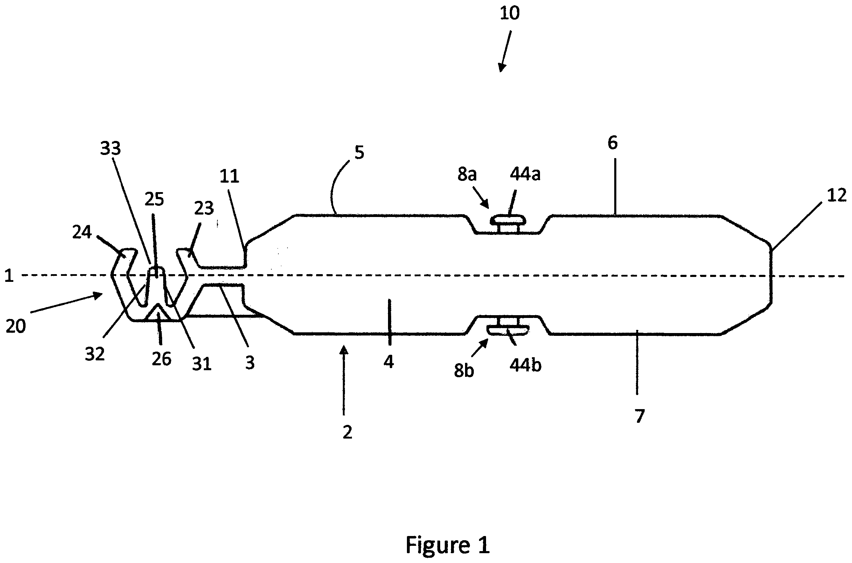

Figure 1 shows a side view of an embodiment of a device 10 for fitting a chain onto the gears of a push-bike. The device 10 comprises a head portion 20 attached to an elongate body 2 by a neck 3. The body 2 of the device 10, is shaped and sized to fit comfortably within the hand of a user. In the current embodiment, the body 2 is substantially rectangular parallelepipedal in shape, with longitudinal axis 1. In the current embodiment, the corner portions of the rectangular cuboidal body 2 have been removed and/or rounded to reduce the occurrence of sharp edges.

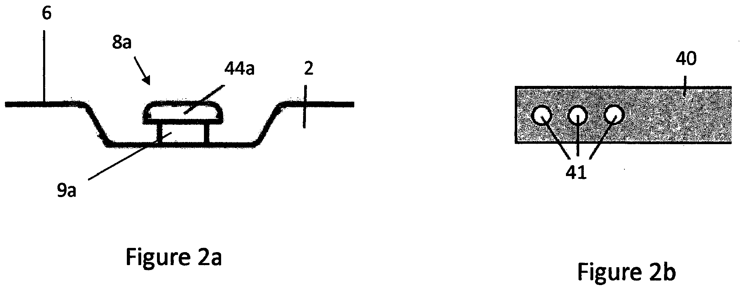

The body 2 comprises a larger front and rear face 4 and 5 respectively, and smaller upper and lower faces 6 and 7, as oriented in figure 1. At a medial location along axis 1 of the body 2, recesses in faces 6 and 7 house attachment nodes 8a and 8b respectively. The nodes 8a and 8b are shown in greater detail in Figures 2a and 2b.

In an alternative embodiment, the body 2 could be any one of oblong, spherical, teardrop shaped or cylindrical. In a preferred embodiment, the body 2 further comprises regular recesses along upper face 5 and lower face 4 to accommodate the fingers of the user, increasing the frictional grip the user can impart on the device 10 and the user's comfort.

The body 2 further incorporates a planar anterior face 11 and posterior face 12. The neck 3 is substantially cylindrical in shape, extending from the anterior face 11 of the body 2, parallel to axis 1. In an alternative embodiment, the neck 3 could extend from the anterior end of the body 2 at an angle, to axis 1. In a further alternative embodiment, the longitudinal cross-section of the neck 3 could be any one of: triangular, square, oval, teardrop, hexagonal, heptagonal, octagonal.

The head 20 comprises a series of prongs, each having a first end and a free end, and being attached at the first end, to the head 20, with their free ends extending perpendicular to the axis 1. The neck 3 is attached to the first prong 23. In the current embodiment, the neck 3 is connected to the first prong 23 at a medial location, with portions of the prong 23 extending inferior and superior from the neck 3, as oriented in figure 1. In an alternative embodiment, the neck 3 is attached to the first prong 23 at the superior or inferior end of the first prong 23.

At the inferior end of the head 20, as oriented in figure 1, the first prong 23 is in fixed attachment with the second prong 25, which in turn is in fixed attachment with the third prong 24. The first prong 23 and third prong 24 are bowed or kinked, such that the superior and inferior peripheral regions project inwardly towards the second prong 25. At the superior end, the space between the first prong 23 and the third prong 24 is suitable for the insertion of a bike chain.

The second prong 25 comprises two lateral sides 31 and 32 and an apex 33. The sides 31 and 32 of the second prong 25 are inwardly angled to converge at the apex 33, such that the width of the second prong 25 increases from the superior end to the inferior end. The width of the second prong 25 at the superior end, is suitable for insertion into the aperture present in a link of a bike chain.

The second prong 25 is of shorter length in comparison to the first prong 23 and the third prong 24. As a result, the apex 33 of the second prong 25 is inferior to the superior ends of the first prong 23 and the third prong 24, as oriented in figure 1. In use, as the second prong 25 is passed into the aperture present in a bike chain, the first prong 23 and the third prong 24 encompass the chain preventing it from slipping off the second prong 25.

The head 20 further incorporates a cut-out portion or recess 26 directly inferior to the second prong 25. In the current embodiment, the recess is a triangular cut out through the depth of the head 20. In use, the recess 26 allows the device 10 to sit comfortably on the chain ring as the chain is reattached.

Figures 2a and 2b show, respectively, the node 8a and an elastic strap 40 in side view. Although figure 2a shows node 8a, it is representative of both of the nodes 8a and 8b. The nodes 8a and 8b comprise a columnar portion 9a and 9b, extending perpendicular to axis 1 from faces 6 and 7, and a bulbous cap 44a and 44b attached at the free ends of the columnar portions 9a and 9b. The caps 44a and 44b have a circumference greater than that of the columnar portions 9a and 9b. The nodes 8a and 8b are shaped to allow the attachment of an elastic strap 40 with pre-set apertures 41 of circumference greater than that of the columnar portion 9a and 9b but less than the caps 44a and 44b. In use, a first end of the elastic strap 40 can be attached to the node 8a, the second end of the elastic strap 40 can then be passed around a part of a frame of a bike (not shown) and then attached to node 8b, releasably securing the device 10 to the bike frame. This enables the user to attach the device 10 to the bike frame, where it can remain during any journey until required. This attachment means, negates the need to pack and store the device 10, ensuring the device 10 is always at hand should the chain come off the chainring.

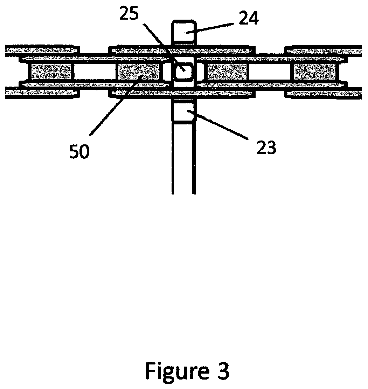

Figure 3 shows a device 10 for fitting a bicycle chain onto the gears of a push-bike, in use, in top view. In use, when the bicycle chain 50 has detached from the chainring or the gears, and therefore become slack, the user pulls on the elastic strap 40, detaching it from node 8b and releasing the device 10 from the bike frame. The user grips the body 2 in the hand, and manoeuvres the head 20 directly beneath the upper loop of the chain. The chain is passed through the gap between the superior portions of the first prong 23 and the third prong 24. The apex 33 of the second prong 25 enters an aperture in a link of the chain 50 helping to hold the chain in place. The user then manoeuvres the device 10 until the head 20 with the chain 50 retained within, rests on the surface of the chainring. The chainring enters the recess 26 allowing the chain 50 to come into close proximity with the chainring, whilst still the chain 50 remains within the head 20. Retaining a grip on the body 2, the user then rotates the device 10 and the chainring until the device 10 is freely released and the chain is refitted to the chainring.

In a preferred embodiment, the device 10 is made from a polymeric plastics material. In a further preferred embodiment, the device 10 is formed from a single injection moulded piece. Alternatively, the device 10 could be formed as a series of distinct pieces in fixed or detachable attachment with each other.

In a preferred embodiment, the rear face 5 of the body 2 is inwardly bowed along the axis 1. In use, when strapped to a cylindrical bike frame, the rear face 5 better fits to the frame.

In an alternative embodiment, not shown, the head 20 of the device 10 comprises only a first prong 23 and a second prong 25 configured as described in Figure 1.

## Claims

1. A device (10) for fitting a chain onto the gears of a push-bike, the device comprising:
an elongate body (2) having a first and a second end extending along a first axis (1); and
a head (20) spaced from said first end by a neck (3);
wherein said head (20) comprises at least a first prong (23) and a second prong (25), each prong (23, 25) having a first attachment end and a free end, wherein said prongs (23, 25) are in fixed attachment to said neck (3) by said first attachment end, said free end extending substantially perpendicularly to said first axis (1);
**characterized in that**
said head incorporates a cut-out portion (26) directly inferior to said second prong's (25) first attachment end.

2. A device according to claim 1, wherein said first (23) and second prongs (25) are connected in series such that said first prong (23) is in fixed attachment with said neck (3) proximal to said body (2) and said second prong (25) is in fixed attachment with said first prong (23) distal from said body (2), wherein the space between the free ends of said first prong (23) and said second prong (25) is suitable for the insertion of a chain link of a bicycle chain (50).

3. A device according to either claim 1 or claim 2, where said head (20) further comprises a third prong (24), wherein said third prong (24) has a first attachment end attached to said first attachment end of said second prong (25) and a free end, wherein said third prong is connected in series with said first (23) and second prongs (25) and is most distal from said body (2).

4. A device according to claim 3, wherein said second prong (25) is shorter than said first and third prongs (23, 24).

5. A device according to claims 3 or 4, wherein said first and third prongs (23, 24) extend inwardly towards said second prong (25) at their respective free ends.

6. A device according to any of the claims 3 to 5, wherein the space between said first and said second prongs (23, 25) and said second and said third prongs (25, 24) is substantially equal.

## Patentansprüche

1. Vorrichtung (10) zum Aufsetzen einer Kette auf die Zahnräder eines Fahrrads, die Vorrichtung aufweisend:
einen länglichen Körper (2) mit einem ersten und einem zweiten Ende, der sich entlang einer ersten Achse (1) erstreckt; und
einen Kopf (20), der durch einen Hals (3) von dem ersten Ende beabstandet ist;
wobei der Kopf (20) einen ersten Vorsprung (23) und einen zweiten Vorsprung (25) aufweist, wobei jeder Vorsprung (23, 25) ein erstes Anbringungsende und ein freies Ende aufweist, wobei die Vorsprünge (23, 25) durch das erste Anbringungsende fest an dem Hals (3) angebracht sind, wobei sich das freie Ende im Wesentlichen senkrecht zu der ersten Achse (1) erstreckt;
**dadurch gekennzeichnet, dass** der Kopf einen ausgeschnittenen Abschnitt (26) direkt unter dem ersten Anbringungsende des zweiten Vorsprungs (25) enthält.

2. Vorrichtung nach Anspruch 1, wobei der erste (23) und der zweite Vorsprung (25) so in Reihe verbunden sind, dass sich der erste Vorsprung (23) in fester Anbringung an den Hals (3) nahe dem Körper (2) befindet und sich der zweite Vorsprung (25) in fester Anbringung an den ersten Vorsprung (23) fern von dem Körper (2) befindet, wobei der Raum zwischen den freien Enden des ersten Vorsprungs (23) und des zweiten Vorsprungs (25) für die Einführung eines Kettenglieds einer Fahrradkette (50) geeignet ist.

3. Vorrichtung nach entweder Anspruch 1 oder Anspruch 2, wobei der Kopf (20) ferner einen dritten Vorsprung (24) aufweist, wobei der dritte Vorsprung (24) ein erstes Anbringungsende, das an dem ersten Anbringungsende des zweiten Vorsprungs (25) angebracht ist, und ein freies Ende aufweist, wobei der dritte Vorsprung in Reihe mit dem ersten (23) und dem zweiten Vorsprung (25) verbunden ist und von dem Körper (2) am weitesten entfernt ist.

4. Vorrichtung nach Anspruch 3, wobei der zweite Vorsprung (25) kürzer als der erste und der dritte Vorsprung (23, 24) ist.

5. Vorrichtung nach Anspruch 3 oder 4, wobei sich der erste und der dritte Vorsprung (23, 24) an ihren jeweiligen freien Enden nach innen in Richtung des zweiten Vorsprungs (25) erstrecken.

6. Vorrichtung nach einem der Ansprüche 3 bis 5, wobei der Raum zwischen dem ersten und dem zweiten Vorsprung (23, 25) und dem zweiten und dem dritten Vorsprung (25, 24) im Wesentlichen gleich ist.

## Revendications

1. Dispositif (10) d'ajustement d'une chaîne sur les engrenages d'un vélo, le dispositif comprenant :
un corps allongé (2) ayant une première et une seconde extrémité s'étendant le long d'un premier axe (1) ; et
une tête (20) espacée de ladite première extrémité par un col (3) ;
ladite tête (20) comprenant au moins une première broche (23) et une deuxième broche (25), chaque broche (23, 25) ayant une première extrémité de fixation et une extrémité libre, lesdites broches (23, 25) étant en fixation fixée audit col (3) par ladite première extrémité de fixation, ladite extrémité libre s'étendant sensiblement perpendiculairement audit premier axe (1) ;
**caractérisé en ce que** ladite tête incorpore une partie découpée (26) directement inférieure à la première extrémité de fixation de ladite deuxième broche (25).

2. Dispositif selon la revendication 1, dans lequel lesdites première (23) et deuxième broches (25) sont connectées en série de telle sorte que ladite première broche (23) est en fixation fixée avec ledit col (3) à proximité dudit corps (2) et ladite deuxième broche (25) est en fixation fixée avec ladite première broche (23) à distance dudit corps (2), l'espace entre les extrémités libres desdites première broche (23) et deuxième broche (25) est approprié pour l'insertion d'un maillon de chaîne d'une chaîne de bicyclette (50).

3. Dispositif selon la revendication 1 ou la revendication 2, dans lequel ladite tête (20) comprend en outre une troisième broche (24), ladite troisième broche (24) ayant une première extrémité de fixation fixée à ladite première extrémité de fixation de ladite deuxième broche (25) et une extrémité libre, ladite troisième broche étant connectée en série avec lesdites première (23) et deuxième broches (25) et est plus éloignée dudit corps (2).

4. Dispositif selon la revendication 3, dans lequel ladite deuxième broche (25) est plus courte que lesdites première et troisième broches (23, 24).

5. Dispositif selon les revendications 3 ou 4, dans lequel lesdites première et troisième broches (23, 24) s'étendent vers l'intérieur vers ladite deuxième broche (25) au niveau de leurs extrémités libres respectives.

6. Dispositif selon l'une quelconque des revendications 3 à 5, dans lequel l'espace entre lesdites première et deuxième broches (23, 25) et lesdites deuxième et troisième broches (25, 24) est sensiblement égal.
